# EUROPEAN PATENT APPLICATION

(11) **EP 4 538 952 A1**
(43) Date of publication of application: **16.04.2025**
(21) Application number: 23819456.7
(22) Date of filing: 13.03.2023
(51) Int. Cl.: G06Q 30/0202, G06Q 30/0207, G06Q 10/087, G06Q 30/06

(54) **INFORMATION PROCESSING DEVICE, INFORMATION PROCESSING METHOD, AND PROGRAM**

(30) Priority: 08.06.2022 JP 2022092677
(71) Applicant: Sato Holdings Kabushiki Kaisha, Tokyo 108-0023 (JP)
(72) Inventor: OGUCHI, Kentaro, Tokyo 108-0023 (JP)
(74) Representative: Grünecker Patent- und Rechtsanwälte PartG mbB
(86) International application number: PCT/JP2023/009503
(87) International publication number: WO 2023/238469

(57) **Abstract**

An information processing device according to one embodiment includes an acquisition unit, a totaling unit, and an output control unit. The acquisition unit acquires, as product storage information, information including a product type, an effective time limit, and a quantity of a product before consumption, for each of users. The totaling unit determines a totaled quantity of the product and a totaled number of users each storing the product, for each of effective time limits, from the product storage information for users living within a predetermined range from a store selling the product, based on the product storage information for each of the users acquired by the acquisition unit and address information of the users. The output control unit outputs results determined by the totaling unit.

## Description

### FIELD

The present invention relates to an information processing device, an information processing method, and a program.

### BACKGROUND

A conventionally proposed system is intended to appropriately determine a product order amount in a retailer.

For example, an order amount calculation system (described in Japanese Patent Application Laid-Open Publication No. 2005-015140, for example) includes a demand amount totaling period calculation unit, a planned stock calculation unit, a safety stock amount calculation unit, a total demand amount calculation unit, an order point calculation unit, and an order amount calculation unit. The demand amount totaling period calculation unit sets a demand amount totaling period by taking lead time into account. The planned stock calculation unit calculates a planned stock at an end of the demand amount totaling period, based on product-shipping records (or sales records), product-arrival records, and a planned product-arrival amount. The safety stock amount calculation unit calculates a safety stock amount in the demand amount totaling period, based on past product-shipping (sales) records. The total demand amount calculation unit predicts a total demand amount for each product in the demand amount totaling period, based on the past product-shipping (sales) records. The order point calculation unit sets, as an order point, the sum of the safety stock amount and the total demand amount. The order amount calculation unit sets, as an order amount, a result of subtracting the planned stock from the order point. An existing system other than the above-described system includes a generated model, and uses the model to calculate an order amount. The model has been trained by machine learning based on past sales record data related to days of the week, weather, a temperature, and the like.

### BRIEF SUMMARY

### TECHNICAL PROBLEM

However, each of the above-described systems is based merely on past data, and has a problem of low accuracy.

In view of the above, an object of the present invention is to recognize product storage information concerning products before consumption, for each user.

### SOLUTION TO PROBLEM

An aspect of the present invention provides an information processing device that includes an acquisition unit, a totaling unit, and an output control unit. The acquisition unit acquires, as product storage information, information including a product type, an effective time limit, and a quantity of a product before consumption, for each of users. The totaling unit determines a totaled quantity of the product and a totaled number of users each storing the product, for each of effective time limits, from the product storage information for users living within a predetermined range from a store selling the product, based on the product storage information for each of the users acquired by the acquisition unit and address information of the users. The output control unit outputs results determined by the totaling unit.

### ADVANTAGEOUS EFFECTS

According to one aspect of the present invention, product storage information concerning a product before consumption can be recognized for each user.

### BRIEF DESCRIPTION OF DRAWINGS

FIG. 1 schematically illustrates a system configuration of a product storage system according to one embodiment.
FIG. 2 illustrates a data configuration example of a store user database.
FIG. 3 illustrates a data configuration example of a user storage database.
FIG. 4 illustrates an image transition example of a store application in a user terminal.
FIG. 5 is a sequence chart representing operation of the product storage system according to the one embodiment.
FIG. 6 illustrates an image transition example of the store application in the user terminal.
FIG. 7 is a sequence chart representing operation of the product storage system according to the one embodiment.
FIG. 8 illustrates an image transition example of a storage application in the user terminal.
FIG. 9 illustrates an image example of the storage application in the user terminal.
FIG. 10 illustrates an image transition example of the storage application in the user terminal.
FIG. 11 is a sequence chart representing operation of the product storage system according to the one embodiment.
FIG. 12 is a sequence chart representing operation of the product storage system according to the one embodiment.
FIG. 13 illustrates a data configuration example of totaled data.
FIG. 14 is a sequence chart representing operation of the product storage system according to the one embodiment.
FIG. 15 is a block diagram illustrating an internal configuration of each device in the product storage system according to the one embodiment.
FIG. 16 schematically illustrates a system configuration of a product storage system according to one embodiment.
FIG. 17 is a sequence chart representing operation of the product storage system according to the one embodiment.

### DETAILED DESCRIPTION

In the present disclosure, "a product type" of a product is information that identifies a type, a sort, a category, or the like of the product. The below-described category is one example of a product type.

In the present disclosure, "an effective time limit" of a product is information indicating an index of whether the product can be used, tasted, or consumed by a user. Examples of the effective time limit includes a use time limit, a tasting time limit, a consuming time limit, a quality-guarantee time limit, and the like.

In the present disclosure, "a quantity of a product" may be any quantity that allows a content of the product to be quantitatively recognized, and is not limited to the number of items such as 1 or 2, and also encompasses a value, such as 300 ml, indicating a quantity of liquid, and a value, such as 1/2 (one-half), 2/3 (two-thirds), or 60%, indicating a proportion to an original quantity of the product,

In the present disclosure, "product storage information" is information concerning a product stored by a user in his or her home.

In a product storage system according to one embodiment, information concerning a product stored by a user in his or her home is managed by a user terminal or the like, for example. The user terminal is carried by the user.

Although not particularly limited, a stored product may be any product associated with an effective time limit and stored by a user in his or her home. Examples of the representative stored product include food, a beverage, seasoning, and the like purchased by the user in a retail store.

Configurations described below are not limited to the drawings described by the brief description of the drawings.

A first aspect of the present invention provides an information processing device including an acquisition unit, a totaling unit, and an output control unit.

The acquisition unit acquires product storage information, for each of users. The product storage information is information including a product type, an effective time limit, and a quantity of a product before consumption. The totaling unit determines a totaled quantity of the product and a totaled number of users each storing the product, for each of effective time limits, from the product storage information for users living within the predetermined range from a store selling the product, based on the product storage information acquired by the acquisition unit and address information of the users. The output control unit outputs results determined by the totaling unit. Here, "consumption" of the product means a state where the user has entirely consumed the target product and is no longer storing the target product. Accordingly, when any part of the product remains unconsumed, the product is regarded to be "before consumption".

When an effective time limit of the product stored by the user living within the predetermined range from the store becomes close, there is a high probability that the user will visit the store to purchase new one. Thus, the output results of the totaling unit represent visualized potential demand for the product within the predetermined range from the store. For this reason, the store can recognize the product storage information concerning the product before consumption for each user, based on the output results of the totaling unit. Here, the reason why the users living within the predetermined range from the store are targeted for the totaling is that, from a standpoint of the store, potential demand for the product for the users regarded to use the store can be accurately visualized, and can be accurately related to accurate receiving and issuing of an order of the product.

A second aspect of the present invention is the information processing device according to the first aspect. In the second aspect, when the totaled quantity of the product for each of the effective time limits, determined by the totaling unit, satisfies a predetermined condition, the output control unit outputs privilege information to user terminals of the users living within the predetermined range, subject to purchase of the product. Thus, providing the privilege information to the users can lead the users to visit the store. Here, "privilege information" is not particularly limited, and may be any information that is beneficial to the user. Examples of the privilege information include a coupon and the like. The coupon can be used in purchasing the product in the store.

A third aspect of the present invention is the information processing device according to the first aspect or the second aspect. In the third aspect, when the totaled number of users each storing the product for each of the effective time limits, determined by the totaling unit, satisfies a predetermined condition, the output control unit outputs the privilege information to user terminals of the users living within the predetermined range, subject to purchase of the product. Thus, when the number of the users is large, providing the privilege information can stimulate the users to actively visit the store, and can result in increased sales of products. This is because the one customer purchases two or more products in some cases.

A fourth aspect of the present invention is the information processing device of any one of the first aspect to the third aspect. In the fourth aspect, the information processing device includes a reception unit and a product order unit. The reception unit receives, from a user terminal for each of the users, a request concerning reservation of purchase of the product. Based on the request from each of the user terminals, the product order unit orders the product so that the product is delivered to the store. Thus, the user himself or herself reserves purchase of the product. Thereby, the user can be more reliably led to visit the store. When the request concerning reservation of purchase of the product has been received from the user, the privilege information subject to purchase of the product may be more beneficial to the user than the privilege information in a case where the request has not been received. Thereby, the user is motivated to actively make the above-described request, thus resulting in a higher possibility that the user visits the store. The privilege information may include the reception unit for receiving the request concerning the reservation of purchase of the purchase.

A fifth aspect of the present invention is the information processing device according to the fourth aspect. In the fifth aspect, the product order unit orders a number of the product that is set depending on the number of the requests for the product received by the reception unit. Thereby, the users who visit the store can reliably purchase products.

A sixth aspect of the present invention is the information processing device according to the fourth aspect. In the sixth aspect, the product order unit adjusts an order amount of the product, depending on a ratio of the number of the requests received by the reception unit to the number of users of the store, or a ratio of the number of the requests received by the reception unit to the average number of the product that have been sold per day at the store. Thus, adjusting an order amount of the product can improve accuracy of an order amount of the product.

A seventh aspect of the present invention is the information processing device according to any one of the first aspect to the sixth aspect. In the seventh aspect, the output control unit outputs, to a user terminal of the user, information presenting an item of a dish for which the product is used as an ingredient. Thereby, consumption of the product whose consuming time limit is close can be promoted. For this reason, convenience for the user can be improved.

The acquisition unit may acquire, as the product storage information, information including the product type, the effective time limit, and the quantity of the product purchased by the user at the store. The acquisition unit may also acquire, as the product storage information, information input to a user terminal of the user and including the product type, the effective time limit, and the quantity of the product. Thereby, the store can acquire the information concerning the product that the user has purchased from a source other than the store.

The acquisition unit may acquire, as the product storage information, information including the product type, the effective time limit, and the quantity of the product purchased by the user at each of a plurality of stores. This can eliminate time and effort for the user to input to the user terminal the information associated with the product purchased from the store other than the specific store and to transmit the input information to the information processing device.

The following describes embodiments with reference to the drawings.

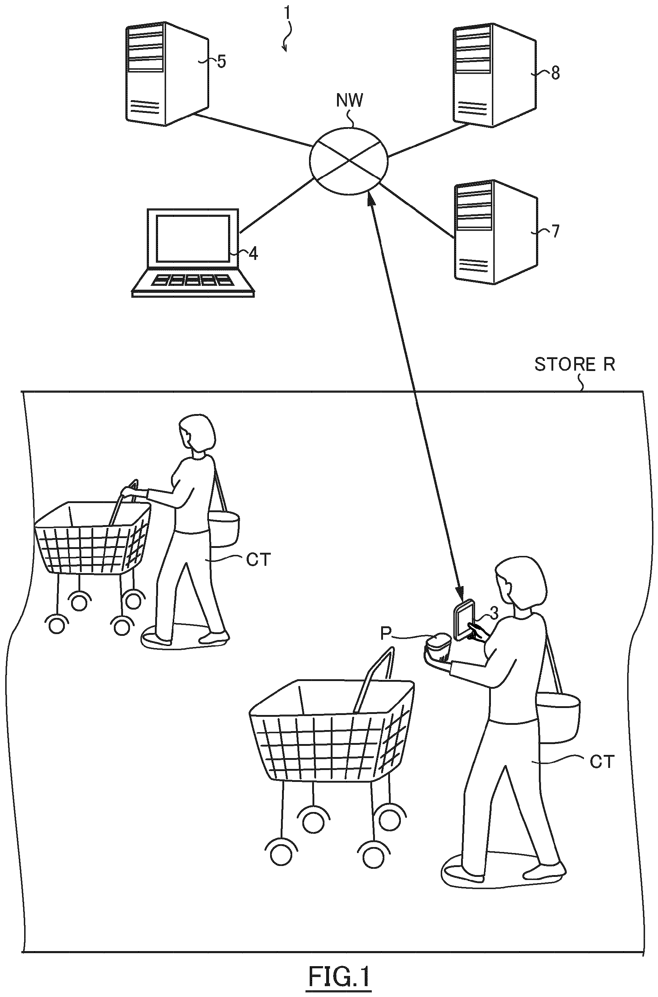

A system configuration of a product storage system 1 according to one embodiment is described with reference to FIG. 1. The product storage system 1 is configured to be able to manage information concerning products of a user that have been purchased in a store R or the like for example and that are stored in his or her home. Although a food product is cited as an example of the product, the product is not limited to a food product and may be any product, such as seasoning, that has a consuming time limit (one example of an effective time limit). In an example of the present embodiment, the store R is a retailer that sells, as the products, food products or the like having consuming time limits. The retailer is a supermarket or the like. The product storage system 1 is configured in such a way as to enable a user to complete payment without a register in the store R for example. The term "without a register" means use of a system in which payment is made via a user terminal carried by the user, without undergoing a POS register of the store.

As illustrated in FIG. 1, the product storage system 1 according to the one embodiment includes a user terminal 3, a store terminal 4, a store server 5, a payment proxy server 7, and a storage server 8. The user terminal 3 is carried by a user CT shopping in the store R. The user CT can use the user terminal 3 or the like in managing information concerning products purchased in the store R. The product storage system 1 is configured in such a way that the user terminal 3, the store terminal 4, and a group of the servers can communicate with each other via a network NW. The network NW is, but not limited to, the Internet, a local area network (LAN), a wide area network (WAN), or the like, for example.

The store server 5 is provided for implementing a POS register, a system without a register, or the like in the store R used by the user. The store server 5 can communicate with the payment proxy server 7. The store server 5 requests the payment proxy server 7 to make payment processing. Thereby, the store server 5 supports payment for products that is made by the user via a system without a register, or via a POS register or the like.

A store application associated with the store R for example is installed in the user terminal 3 carried by the user CT. The store application communicates with the store server 5 of the store R to make payment without a register in the store R, for example. In the payment without a register, the store server 5, the user terminal 3, and the payment proxy server 7 exchange data with each other. In payment via a POS register, the store server 5, an unillustrated POS register in the store, and the payment proxy server 7 exchange data with each other.

A storage application for managing information concerning products purchased by the user is installed in the user terminal 3. The storage application communicates with the storage server 8 to manage the information concerning the products purchased by the user.

The storage server 8 can communicate with the user terminal 3 and the store server 5.

The storage server 8 acquires, from the store server 5 or the like for example, information concerning products for which payment has been made by the user. The storage server 8 manages storage data (described below) as product storage information for each user. The storage server 8 performs order processing, depending on the number of stored products for each consuming time limit that are ones of the user before consumption, for example. The storage server 8 distributes the privilege information to the users, depending on the number of stored products for each consuming time limit that are ones before consumption. The storage server 8 provides the storage data to the user via the user terminal 3, in response to a request from the storage application, for example. The storage server 8 updates the storage data in response to a request from the storage application, for example. The storage server 8 totals the storage data for each of the users, and transmits the totaled data to the store terminal 4. Thereby, a staff in charge in the store can check the storage data for the users.

In the following description and the drawings, the store application and the storage application are appropriately abbreviated as the "store app" and the "storage app" respectively in some cases.

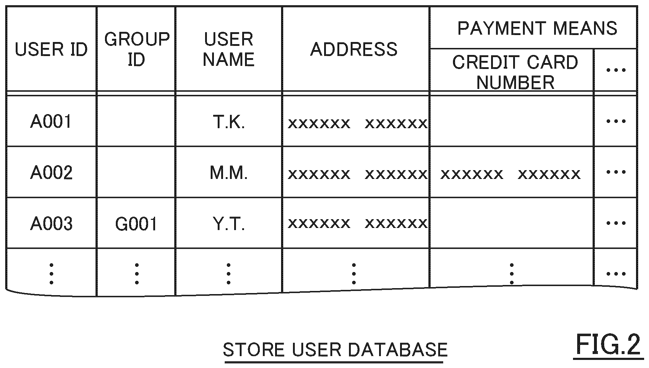

The store server 5 stores a store user database exemplified in FIG. 2. The user database exemplified in FIG. 2 includes records each including fields of "user ID", "group ID", "user name", "address or postal code," and "payment means". Each of the fields includes a value. Here, the value of the field of "user ID" is identification information assigned to the user of the store R.

The value of the field of "group ID" is an ID commonly assigned to a plurality of users. In a typical example, the single group ID is assigned to a plurality of the users, such as family members, who share the livelihood, in response to application from the user for example. For example, when a parent as the user already registered in the store app user database newly registers his or her child as the user, the same group ID is assigned to the parent as the user and the child as the user.

The value of each of the fields of "user name" and "address" is acquired based on an input operated by the user, at a timing that the user installs the store application in the user terminal 3. These acquired values are recorded in the user database. The value of the field of "payment means" is acquired based on an input operated by the user, at a timing that the user installs the store application in the user terminal 3, or at an arbitrary timing after the installation. The acquired value of the field of "payment means" is recorded or updated in the user database.

The value of the field of "payment means" is data necessary for the user to make payment for a product. For example, the value of the field of "payment means" is one or both of information of a credit card number and information (prepaid number or the like) related to electronic money. The value of the field of "payment means" is provided to the payment proxy server 7 when the user associated with the user ID makes payment.

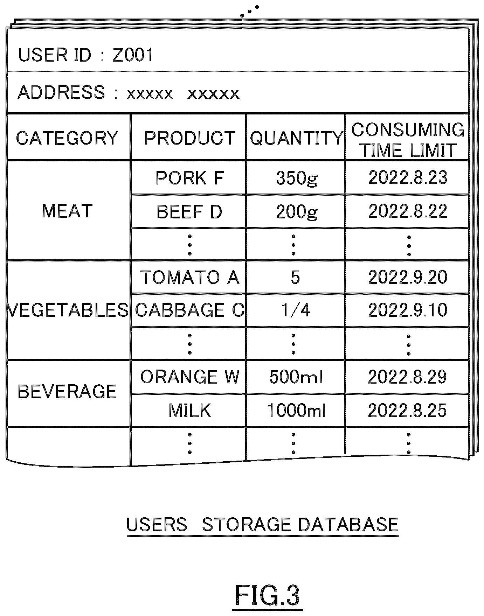

FIG. 3 illustrates a configuration example of the user storage database. The user storage database represents data of products stored for a unit of the user or for a unit of the group. The user storage database is stored in the storage server 8. The user storage database is managed for each of the user IDs or for each of the group IDs. The records each of which includes data of the address associated with the user ID or the group ID and each of which is associated with the user ID or the group ID each includes values of the fields of "category", "product", "quantity", and "consuming time limit", for example. In the user storage database, data of products associated with two or more users who belong to the same household are aggregated as data of the products associated with the one group ID.

The user storage database is generated, based on information (purchase data described below) that concerns products purchased by the user in the store R and that are acquired from the store server 5, for example. One record in the user storage database is, for example, data of the products (for which payment has been completed) that the user purchased in the store R.

The user storage database expresses an execution result of the storage application of the user. A record included in the user storage database may be data of a product purchased by the user in a store other than the store R, in some cases. A value of the field of "product" in the user storage database in FIG. 3 is a value associated with a product code of a specific product such as "pork F" or "tomato A" when the user has purchased the product in the store R. In contrast to this, when the user purchases a product in a store other than the store R and inputs information of this product via the storage application, a value of the field of "product" in the user storage database is a value indicating a general product name such as "milk", instead of a value indicating a product code of a specific product.

When the user inputs, via the storage application, information of a product purchased in a store other than the store R, the storage application or the storage server 8 may determine an associated category (one example of a product type) of the purchased product, based on the input information of the product, and may set a value of the determined category as a value of the field of "category" in the user storage database.

Hereinafter, data for each of the user IDs or for each of the group IDs in the user storage database are referred to as "storage data".

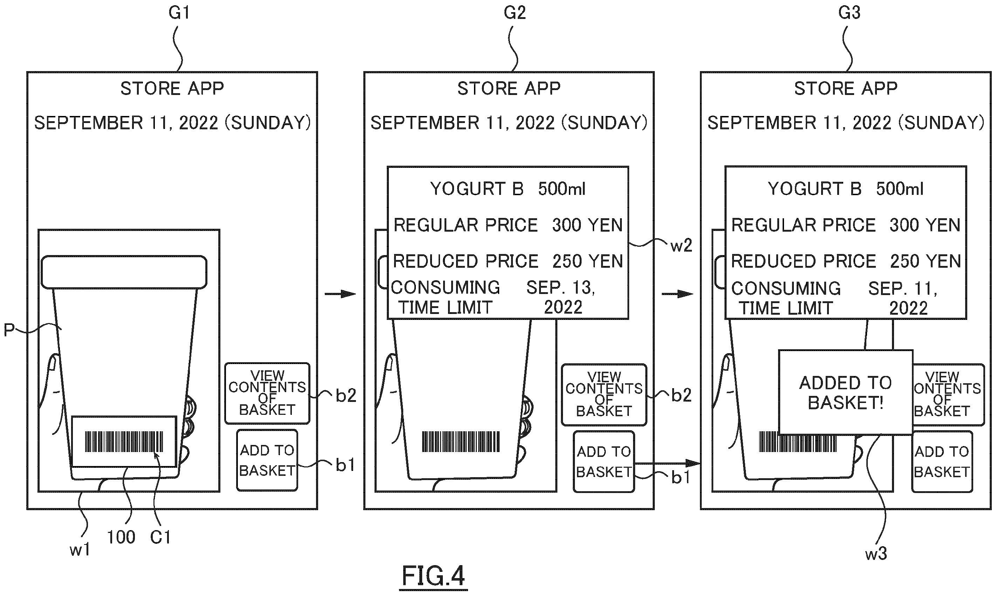

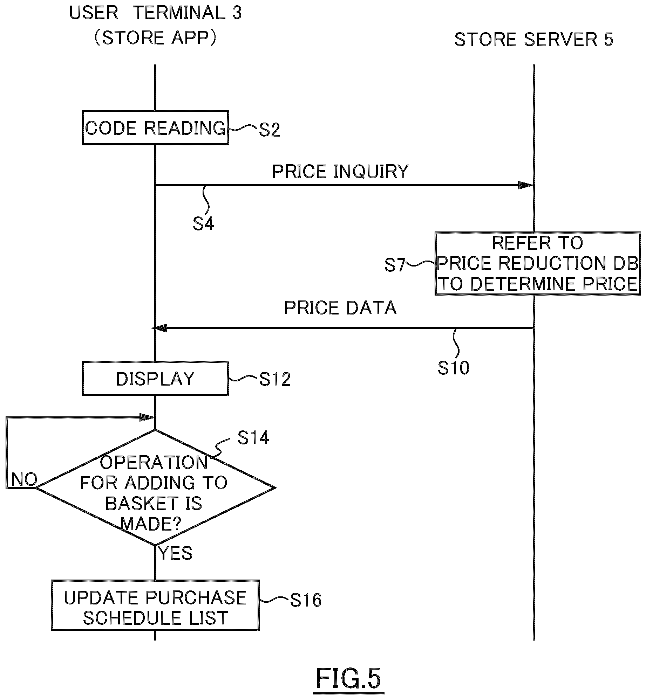

Next, a method of using the store application in the user terminal 3 is described with reference to FIG. 4 and FIG. 5. FIG. 4 illustrates an image transition example of the store application in the user terminal 3. FIG. 5 is a sequence chart that represents processing of the store application in the user terminal 3.

Execution of the store application allows the user to check an offered price of each product in the store and pay for the product selected by the user. Images G1 to G3 in FIG. 4 represent a method of using the store application when the user checks a price of a product and adds the product to a purchase schedule list (basket).

When a user activates the store application in the user terminal 3, an image-capturing function provided in the user terminal 3 works in cooperation so that a captured image is displayed in a window w1, as illustrated in the image G1 of FIG. 4. The window w1 in the image G1 includes the image of a product P in which the product P is picked up from a shelf in the store by the user and code information C1 displayed on the product P is made visible. Displaying the code information C1 of the product P in the window w1 (i.e., scanning operation made by the user) causes the store application to read (scan) the code information C1 (at step S2 in FIG. 5). The image-capturing function of the user terminal 3 preferably includes a function of displaying a scanning area 100 in the window w1 in such a way as to enable a target code information to be reliably read when a plurality of pieces of code information are displayed in the window w1. In this case, only the code information C1 that is among a plurality of the pieces of code information in the window w1 and that is displayed in the scanning area 100 is read.

For example, the code information C1 includes a product code of the associated product P and information (consuming time limit information) of a consuming time limit of the associated product P. As long as the code information C1 includes the product code and the consuming time limit information, a code format of the code information C1 is not particularly limited. When the code information C1 is a barcode (one-dimensional code), CODE128 such as GS1-128 can be used. Since CODE128 can convert all 128 ASCII characters into a barcode, the code information C1 can be configured to include the product code and the consuming time information.

In order to affix a label including GS1-128 to each product in the store, the labels may be affixed automatically in bulk to the products in a distribution center by using an affixing robot or the like, or measurement labels including GS1-128 may be affixed to the products at the time of producing precooked or prepared food or the like in the store. Thereby, the label printed with GS1-128 including consuming time limit information can be affixed also to a product printed with a code (such as JAN13) that does not include consuming time limit information.

When the code information C1 is read, the store application transmits, to the store server 5, an inquiry request for an offered price of the product P to the user (at step S4 in FIG. 5). The inquiry request includes the product code and the consuming time limit information included in the code information C1. When the store server 5 receives the price inquiry, the store server 5 determines a price (offered price) of the product by referring to an unillustrated price reduction database (at step S7), and transmits, to the store application, price data including information of a regular price and the offer price of the product P (at step S10). The price reduction database includes information of a price reduction rate associated with one or both of the product code for each product and the time limit information of the product. Information of a regular price of each product is recorded in an unillustrated price database.

The store application receives the price data from the store server 5, and displays the received price data (at step S12).

For example, referring to FIG. 4, a window w2 in the image G2 displayed at the step S12 includes information of a product name ("yogurt B 500 ml"), the regular price ("300 yen"), the offered price ("250 yen"), and the consuming time limit ("SEP. 13, 2022") that are associated with the product code.

The user can view the information included in the window w2 in the image G2, and can select whether to add the product P to the purchase schedule list (basket). In a case of adding the product P to the purchase schedule list, the user operates a button b1 ("add to basket") displayed in the image G2 (yes at step S14 in FIG. 5). Thereby, the image G3 is displayed to notify the user that the product P has been added to the purchase schedule list (by a window w3). In this case, the user puts the picked-up product P into an actual basket or shopping cart in the store. In response to the operation of the button b1, the user terminal 3 updates the purchase schedule list in such a way as to add information of the target product to the purchase schedule list (at step S16).

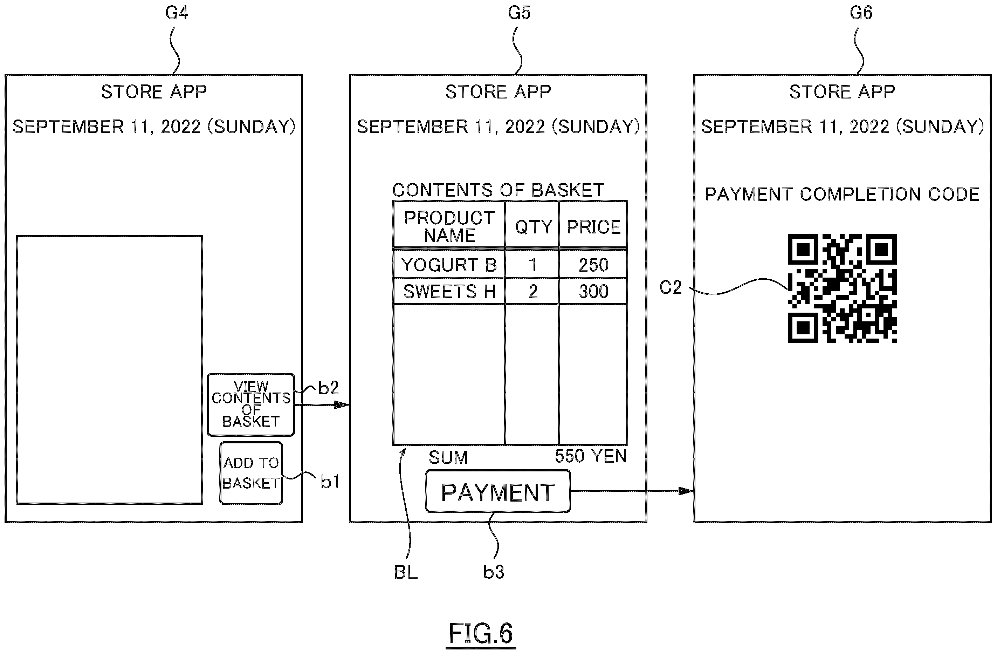

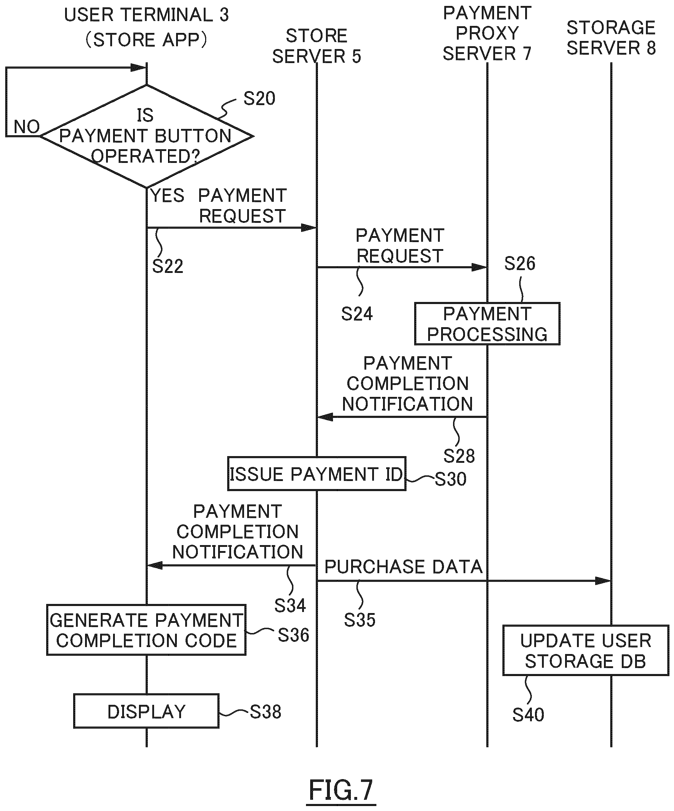

Next, a method of using the store application at the time of paying for products via the store application in the user terminal 3 is described with reference to FIG. 6 and FIG. 7. FIG. 6 illustrates an image transition example of the store application in the user terminal 3. FIG. 7 is a sequence chart that represents processing of the store application in the user terminal 3.

In a case of making payment after the user checks offered prices of products and adds the products to the purchase schedule list (i.e., after the user repeatedly causes the images G1 to G3 in FIG. 4 to be displayed), the user operates a button b2 ("view contents of basket") in an image G4. Thereby, an image G5 including the purchase schedule list BL is displayed. The purchase schedule list BL includes a list (a product name, a quantity, and a price of each product) of products that have been added so far, and includes the sum of the prices. When the user stops purchasing the particular product in the purchase schedule list BL because of spending beyond an intended price range for example, the user can make operation of deleting the product from the purchase schedule list BL.

When the purchase schedule list BL is finalized, the user operates a button b3 (payment button) in the image G5 (at step S20 in FIG. 7). Thereby, the store application transmits, to the store server 5, a payment request including the purchase schedule list (at step S22). When the store server 5 receives the payment request from the store application, the store server 5 reads out data of a user name and a payment means from the user database, and transmits, to the payment proxy server 7, a payment request including the read-out data of the user name and the payment means and data of a payment amount (the sum of the prices in the purchase schedule list) (at step S24). The payment proxy server 7 performs payment processing, based on the data provided from the store server 5 (step S26). When the payment processing is completed, the payment proxy server 7 transmits payment completion notification to the store server 5 (at step S28).

When the payment is completed, the store server 5 issues a new payment ID (at step S30), and transmits, to the store application, payment completion notification associated with the payment request of the step S22 (at step S34). This payment completion notification includes the payment ID issued at the step S30. The store application generates a payment completion code that is a two-dimensional code including the payment ID included in the received payment completion notification (at step S36), and displays the generated payment completion code on the user terminal 3 (at step S38). For example, an image G6 including code information C2 as the payment completion code is displayed as illustrated in FIG. 6. The payment completion code indicates that the payment for the products has been completed, and includes the payment ID (described below) that identifies the payment. The payment completion code is the two-dimensional code in this example, but may be a barcode or the like.

For example, the payment completion code represented in the image G6 is used to notify the store or a store staff that the payment for the products in the basket has been completed. For example, the store may be configured in such a way that the user is allowed to leave the store, by showing the payment completion code to the store staff. Alternatively, the store may be configured in such a way that reading the payment completion code by a predetermined device in the store causes a gate to be opened so that the user is allowed to leave the store. In these cases, the user does not need to wait in line for a register, and a register staff does not need to process payment for products. Thus, both of the user and the store can gain the benefit.

The store server 5 transmits the purchase data to the storage server 8 (at step S35). The purchase data include, as information concerning the products for which the user has completed payment, information of product codes, quantities, and consuming time limits of the products, for example. For example, the purchase data may include information (e.g., information written on a product label affixed to the product) managed in association with the above-described code information C1. When the storage server 8 receives the purchase data from the store server 5, the storage server 8 generates or updates the user storage database (FIG. 3) by using the purchase data for each user (at step S40). FIG. 7 is a sequence chart when payment for products is completed without a register. However, when payment for products is made via a POS register or the like, the storage server 8 acquires purchase data for each user from the POS register, based on a user ID, and thereby generates or updates a user storage database.

The storage server 8 generates and updates the user storage database by using the purchase data, thereby acquiring and managing the storage data (one example of product storage information before consumption), for each user, as illustrated in FIG. 3. Acquiring the purchase data by the storage server 8 at the step S35 is one example of acquiring product storage information of a user.

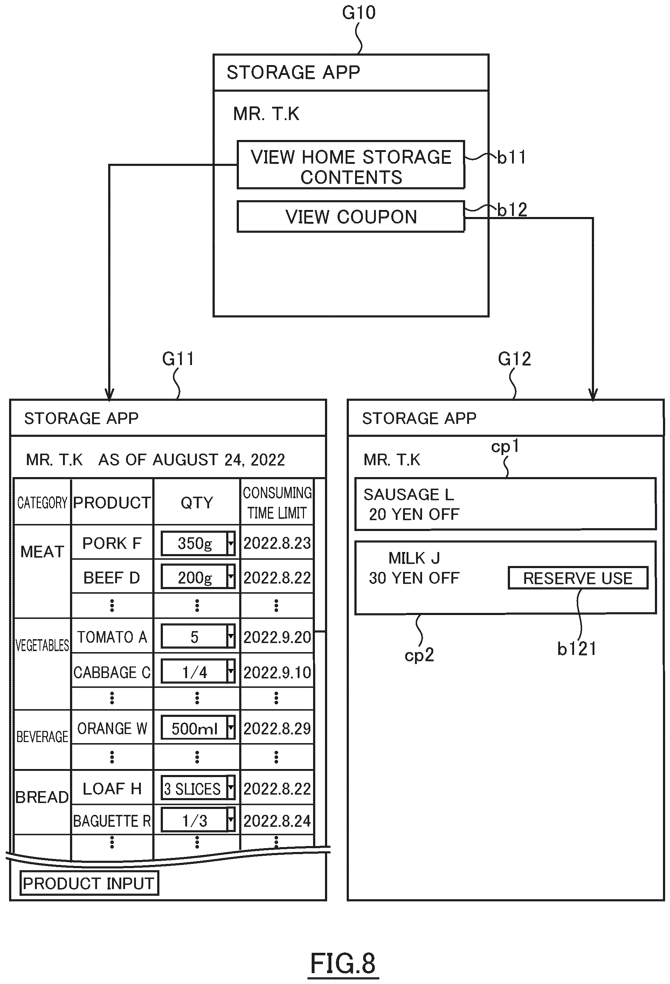

Next, a method of using the storage application is described with reference to FIG. 8 to FIG. 10.

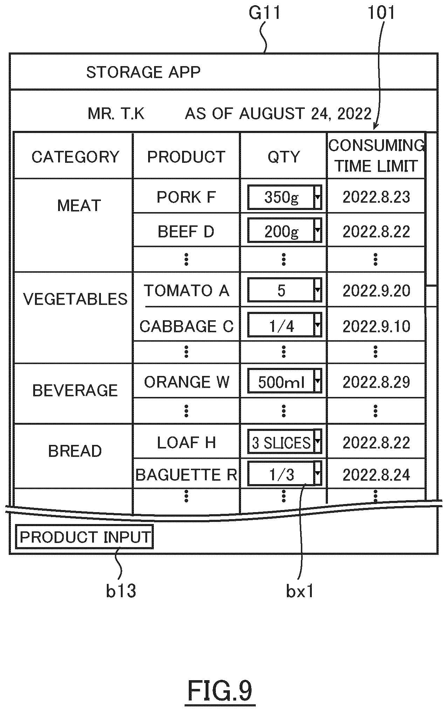

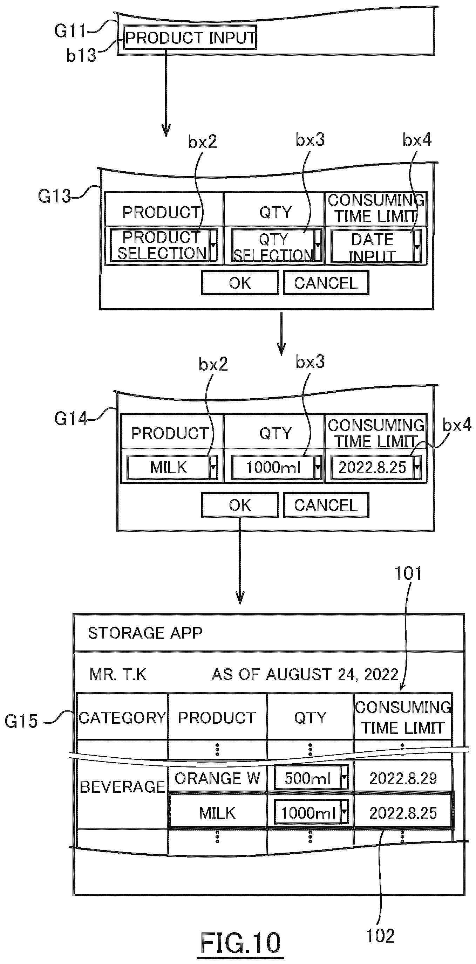

FIG. 8 illustrates an image transition example from a home image of the storage application in the user terminal 3. FIG. 9 illustrates an image example of the storage application in the user terminal 3. FIG. 10 illustrates an image transition example at the time of inputting a product in the storage application of the user terminal 3.

An image G10 in FIG. 8 is the home image after the user logs in to the storage application. This home image includes a button b11 and a button b12, for example. The button b11 is provided for viewing storage contents of products before consumption that are stored in the home of the user. The button b12 is provided for viewing a coupon that can be used in the store. Operating the button b11 causes an image G11 to be displayed. The image G11 includes a list of the products stored by the user. Operating the button b12 causes an image G12 to be displayed. When there is a coupon usable in the store, the image G12 includes the coupon. In the illustrated example of the image G12, for example, two coupons cp1 and cp2 can be used in the store R.

The following describes the image G11 in FIG. 8 in more detail, with reference to FIG. 9. The image G11 includes the storage data 101 of the user. In order to display the storage data 101, the storage application acquires, from the storage server 8, the storage data associated with the user. The storage server 8 holds the user storage database (FIG. 3). When the user to whom the group ID is assigned causes the storage application to be executed, the storage data associated with the assigned group ID are displayed.

The storage data 101 include data of respective items such as "category", "product", "quantity", and "consuming time limit", for each product. Products and categories may be associated with each other in a store management application. In the storage data 101, "quantity" indicates a remaining quantity of the product stored by the user. A pull-down menu bx1 is provided at the quantity associated with each product. The user can change the quantity by operating the pull-down menu bx1, depending on an amount of the product consumed by the user.

A value of "quantity" of the product can be also acquired automatically instead of being input by the user. For example, the storage application may work in cooperation with the image-capturing function of the user terminal 3. Thereby, an image of the product is captured. Based on the captured image, product information of the product and a weight of the product are estimated to acquire a value of "quantity" of the product. An AI technique may be used to estimate a weight of the product.

Alternatively, a wireless tag including a weight sensor may be incorporated near a bottom surface of the product to acquire a value of "quantity" of the product. In this case, the storage application receives data of a weight of the product by wireless communication with the wireless tag, and thereby acquire a value of "quantity" of the product. A type of the wireless tag is not particularly limited, and may be, for example, an energy harvesting tag that converts, into energy, radio waves of different frequency bands in a wide range.

The user storage database is updated for the products for which the user has completed payment in the store R (FIG. 1), for example without a register. This update is based on the purchase data as described above with reference to FIG. 7, and is reflected in the storage data of the user. When the user purchases products in a store other than the store R, the user can input information of the products to the storage application. Thereby, the storage data can be updated.

FIG. 10 illustrates an image transition example when the user inputs, in the storage application, information of a product purchased in a different store. The procedure for inputting information of the product is described with reference to FIG. 10. First, operating a product input button b13 in the image G11 causes an image G13 to be displayed for inputting data of the respective items of "product", "quantity", and "consuming time limit". In the image G13, pull-down menus bx2, bx3, and bx4 are provided for "product", "quantity", and "consuming time limit", respectively. The user can operate the pull-down menu bx1 to select appropriate data. Data of a carton of 1000-ml milk as the product having a consuming time limit of August 25, 2022 are input in an image G14, in an illustrated example. Operating an OK button after the input in the image G14 causes the additional data 102 to be included in the storage data 101, as illustrated in an image G15.

The storage application may work in cooperation with the image-capturing function of the user terminal 3 to acquire an image of a label of a product, and may automatically input data of respective items of "product", "quantity", and "consuming time limit", based on code information and text information included in the acquired image of the label.

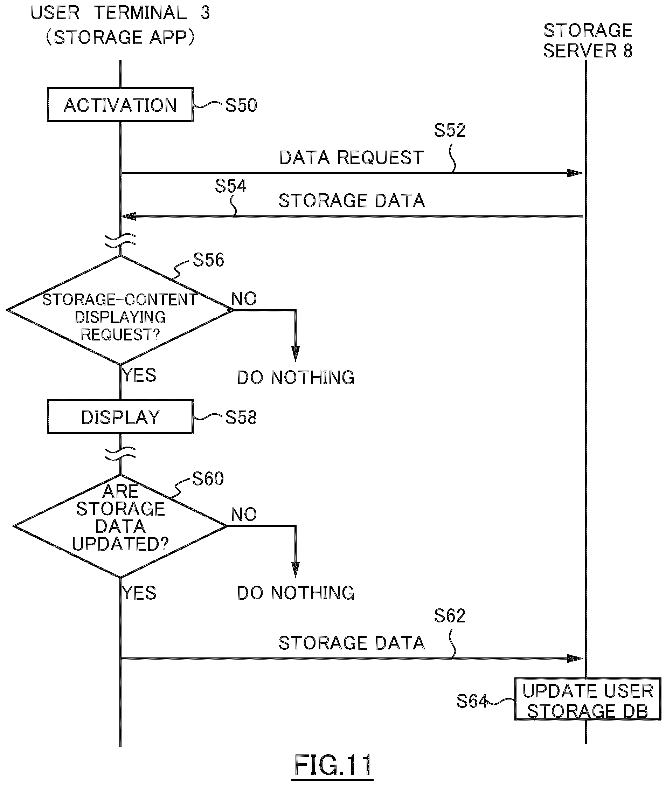

Next, operation of the product storage system 1 according to the one embodiment is described with reference to a sequence chart of FIG. 11. In FIG. 11, when the storage application in the user terminal 3 is activated (at step S50), the storage application transmits, to the storage server 8, a data request for acquiring the storage data (at step S52). Based on the data request, the storage server 8 reads out, from the user storage database, the storage data associated with the user of the storage application, and transmits the read-out storage data to the storage application (at step S54). When the storage application receives a storage-content displaying request from the user (yes at step S56), the storage application displays the storage data received at the step S54 (at step S58). The storage-content displaying request corresponds to operation of the button b11 in FIG. 8. An example of the storage data displayed at the step S58 corresponds to the image G11 in FIG. 8.

On the storage application, the user changes a quantity of a product included in the storage data or inputs a new product. Thereby, the storage data held by the storage application are updated (yes at step S60). In this case, the updated storage data are transmitted to the storage server 8 (at step S62). The storage server 8 updates the user storage database, based on the received storage data (step S64).

Acquiring the storage data by the storage server 8 at the step S62 is one example of acquiring product storage information of a user.

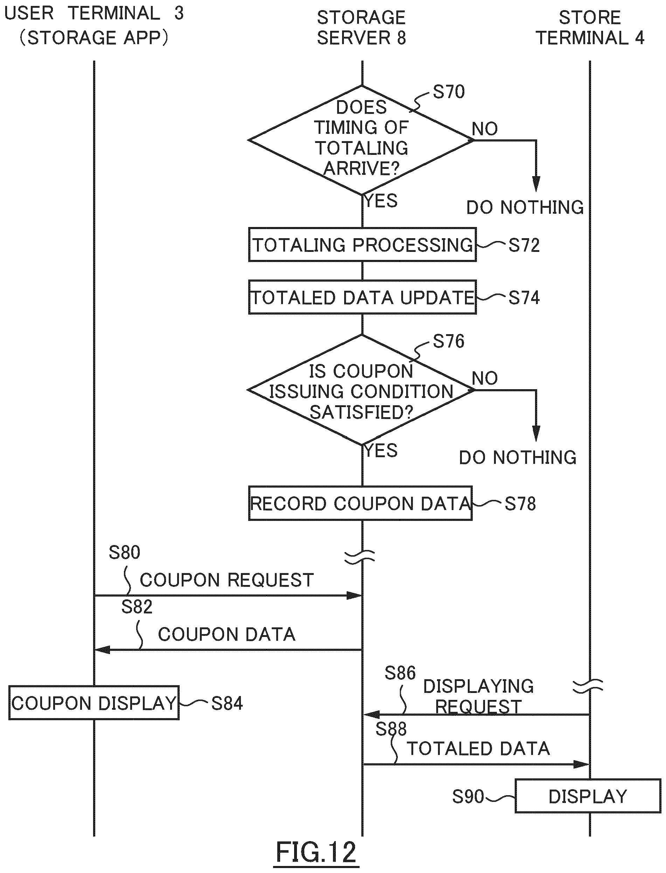

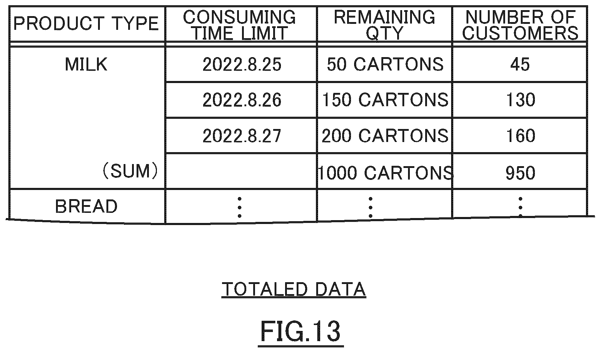

Next, totaling processing executed in the storage server 8 is described with reference to FIG. 12 and FIG. 13. FIG. 12 is a sequence chart at the time of performing the totaling processing in the product storage system 1 according to the one embodiment. FIG. 13 illustrates a data configuration example of totaled data acquired by the totaling processing.

The totaling processing is processing of totaling, for each product, storage data of the users who live within a predetermined range (e.g., 1 km) from the store. Performing the totaling processing can determine, for each consuming time limit, a remaining quantity of the product stored by the users living within the predetermined range from the store. Thus, potential demand for the product in the store can be accurately recognized.

The following describes operation of the product storage system 1 when the storage server 8 performs the totaling processing, with reference to the sequence chart of FIG. 12. In FIG. 12, when a timing of the totaling arrives (yes at step S70), the storage server 8 executes the totaling processing (at step S72). Although the timing of the totaling can be arbitrarily set by a store staff, an example of the timing of the totaling is a predetermined time point before the store opens or after the store closes. The totaling processing includes the following processes.
(a) The process of referring to the user storage database and thereby identifying the user IDs or the group IDs associated with the users who live within the predetermined range from the store
(b) The process of extracting the storage data associated with the identified user IDs or group IDs
(c) The process of classifying the extracted storage data by product types, further classifying the classified storage data by consuming time limits to total the number of the products

FIG. 13 illustrates a data configuration example of the totaled data. Each of records of the totaled data exemplified in FIG. 13 includes values of fields of "product type", "consuming time limit", "remaining quantity", and "number of customers". The product type in this example indicates a product sort that is more specific than a category (e.g., "beverage") in the user storage database (FIG. 3), and is identified from a value or the like of a product of the storage data. For example, when a value of a product of the storage data is a value associated with a product code of milk A or milk K, or is a value of a string as "milk" input by the user, a value of the product type is "milk".

A predetermined number of dates based on a current time point for example are set as a value of the field of "consuming time limit". In an example of FIG. 13, a date on which the totaled data in FIG. 13 are generated is August 25, 2022, and the records associated with consuming time limits of three dates including the current date are generated. In this example, "predetermined number of dates" can be set arbitrarily, and can be changed for each product type.

The following returns to description of FIG. 12. When the totaling processing is completed, the storage server 8 updates, with the totaled data acquired at the step S72, the totaled data acquired by the previous totaling processing (at step S74).

Next, the storage server 8 determines whether the totaled data acquired at the step S72 satisfies a coupon issuing condition (at step S76). In other words, according to one embodiment, when a quantity that concerns a product for each consuming time limit and that is based on the totaled data satisfies the predetermined coupon issuing condition, the storage server 8 issues a coupon (one example of privilege information), subject to purchase of this product.

Although the coupon issuing condition is not particularly limited, the coupon issuing condition in one embodiment is a condition of "a quantity of a product for each consuming time limit in the totaled data satisfies a predetermined condition". For example, the coupon issuing condition may be a condition of "a quantity of a product that is included in the totaled data and whose consuming time limit is a current date is equal to or larger than a predetermined value" or a condition of "a quantity of a product that is included in the totaled data and whose consuming time limit will arrive within a predetermined number of days (e.g., two days or three days) including a current date is equal to or larger than a predetermined value". When a large number of products each having a close consuming time limit are considered to be stored in the homes, issuing coupons can lead the users to visit the store.

The coupon issuing condition in one embodiment is a condition of "a quantity of a product for each consuming time limit in the totaled data or the number of users (customers) each storing a product for each consuming time limit in the totaled data satisfies a predetermined condition". An example cited as the condition to be satisfied by the number of users each storing a product for each consuming time limit is a condition of "the number of users (the number of customers) each storing a product that is included in the totaled data and whose consuming time limit is a current date is equal to or larger than a predetermined value" or a condition of "the number of users (the number of customers) each storing a product that is included in the totaled data and whose consuming time limit will arrive within a predetermined number of days (e.g., two days or three days) including a current date is equal to or larger than a predetermined value". One customer purchases two or more products for his or her family for example, at the time of visiting the store, in some cases. Thus, when the number of customers in the totaled data is large, issuing coupons stimulates the customers to actively visit the store, and can result in increased sales of products.

When the coupon issuing condition is satisfied, the storage server 8 records coupon data including coupon contents (e.g., information of a product name (sausage L), a privilege content (20 yen off), an expiration date (a term until August 27, 2022) of the coupon, and the like, as represented in the coupon cp1 in FIG. 8) (at step S78).

After the coupon is recorded, operating the button b12 in FIG. 8 in the storage application of the user terminal 3 causes an acquisition request for acquiring the coupons to be transmitted to the storage server 8 (at step S80). The storage server 8 reads out the coupon data already recorded at the step S78 and transmits (distributes) the read-out coupon data to the storage application (at step S82). When the storage application receives the coupon data, the storage application displays the coupons associated with the received coupon data, as represented in the image G12 in FIG. 8 (at step S84).

In FIG. 12, the storage server 8 transmits the coupon data to the storage application in response to the coupon request from the storage application. However, there is no limitation to this. The storage server 8 may make push notification of the coupon data to the storage application.

The coupon data may be distributed to all of the users registered in the store user database, or to all of the users (i.e., the users living within the predetermined range from the store) who have been the basis for the totaling processing at the step S72. Alternatively, the coupon data may be distributed exclusively to the users each storing the product whose consuming time limit will immediately arrive. The coupon data may be distributed to users each storing the product whose consuming time limit will arrive within a predetermined number of days.

As illustrated in FIG. 12, the store terminal 4 transmits a displaying request for the totaled data to the storage server 8 at a desired timing (at step S86). When the storage server 8 receives the displaying request, the storage server 8 transmits, to the store terminal 4, the totaled data that are the latest at this time point (at step S88). The store terminal 4 displays the received totaled data (at step S90). Based on the displayed totaled data (FIG. 13), a store staff member operating the store terminal 4 can recognize a storage state of each product in the homes of the users living within the predetermined range from the store. Thus, the store staff member can make an accurate order plan for the product.

In one embodiment, the user may be able to use a reservation type coupon. The reservation type coupon is a type of coupon of which use is declared (reserved) by the user in advance. Providing a normal coupon to the user can also stimulate the user to visit the store, but in a case of the reservation type coupon, the user declares that the user will use the coupon. Thereby, it is more reliably expected that the user will visit the store. The reservation type coupon offers a privilege whose content (e.g., doubling of points that can be used in stores, or an even larger discount than that of a normal coupon) is more beneficial to a user than that of a normal coupon (e.g., the coupon cp1 in FIG. 8). Thereby, a possibility that the user will visit the store can be increased. This can be related to accurate receiving and issuing of an order of the products.

The coupons cp1 and cp2 in FIG. 8 may each have a coupon expiration date. The user may declare use of the reservation type coupon cp2 while designating a date of the use in advance.

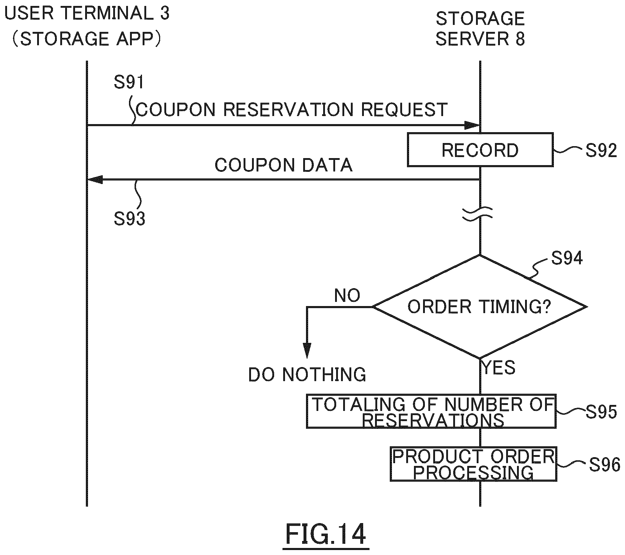

The coupon cp2 in FIG. 8 is one example of the reservation type coupon. The coupon cp2 illustrated in FIG. 8 includes a button b121 for the user to reserve use of the coupon. With reference to a sequence chart of FIG. 14, the following describes operation of the product storage system 1 when the user uses the reservation type coupon.

When the user operates the button b121 ("reserve use") associated with the coupon cp2 in the image G12 for example, the storage application in the user terminal 3 transmits, to the storage server 8, a request (coupon reservation request) for reserving use of the coupon cp2 (at step S91). When the storage server 8 receives the coupon reservation request, the storage server 8 records the user ID of the storage application as the transmission source of the coupon reservation request and records coupon data associated with the coupon reservation request, and transmits, to the storage application, the coupon data indicating that the reservation has been completed (at step S93). When the storage application receives the coupon data indicating that the reservation has been completed, the storage application displays a text indicating "already reserved" in the coupon cp2 in the image G12, for example, which is not illustrated.

When a timing of ordering the products associated with the coupon arrives (yes at step S94), the storage server 8 totals the number of the user IDs (the number of the coupon reservations) recorded so far (at step S95), and performs product order processing in such a way that the target products are delivered to the store (at step S96).

In one embodiment, in the product order processing at the step S96, the storage server 8 orders the products whose number is set depending on the number of the coupon reservations. In one embodiment, the storage server 8 orders the products in such a way that an order amount of the product is larger than the number of the coupon reservations. Thus, purchase of the products that is made with the reservation type coupons by the users visiting the store can be predicted for the product targeted by the coupon.

In one embodiment, in the product order processing at the step S96, the storage server 8 adjusts an order amount of the product, depending on a ratio of the number of the coupon reservations to the number of the users of the store, or a ratio of the number of the coupon reservations to the average number of the products sold per day in the store. For example, a high ratio of the number of the coupon reservations to the number of the users of the store means that a large number of the users will visit the store for the product. In this case, the storage server 8 adjusts an order amount of the product in such a way as to be larger than in a normal case. A high ratio of the number of the coupon reservations to the average number of the products sold per day in the store means that demand for the product is larger than in a normal case. In this case, the storage server 8 adjusts an order amount of the product in such a way as to be larger than in a normal case. Adjusting an order amount of the product in such a manner improves accuracy of an order amount of the product.

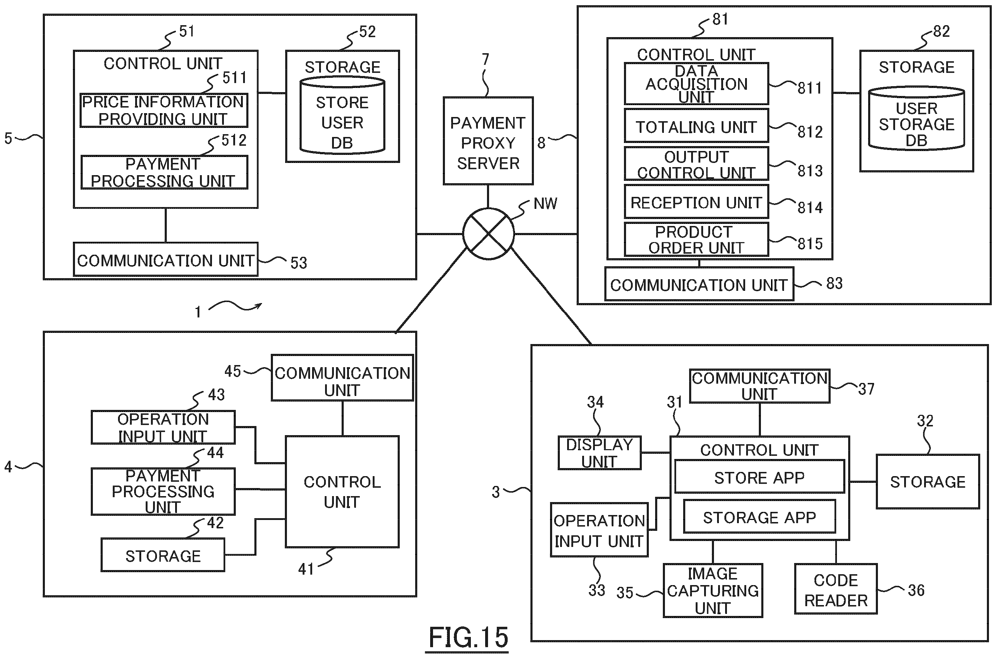

Next, a configuration of each device in the product storage system 1 according to the present embodiment is described with reference to a function block diagram of FIG. 15. As illustrated in FIG. 15, the user terminal 3 includes a control unit 31, a storage 32, an operation input unit 33, a display unit 34, an image capturing unit 35, a code reader 36, and a communication unit 37.

The control unit 31 is constituted mainly by a microprocessor. The control unit 31 controls the entire user terminal 3. For example, the microprocessor included in the control unit 31 loads and executes programs of the store application and the storage application recorded in the storage 32, and displays results of the execution on the display unit 34.

The storage 32 is a non-volatile memory. For example, the storage 32 is a solid state drive (SSD) such as a flash memory. The storage 32 stores the programs of the store application and the storage application, and stores data, files, and the like generated by execution of the store applications and the storage applications.

The operation input unit 33 is, for example, a touch panel type input device provided on a display panel of the user terminal 3. The operation input unit 33 receives an operation input to the display panel from the user, and outputs the received operation input to the store application or the storage application.

The display unit 34 includes a liquid crystal display panel or an organic electroluminescence panel, for example. The display unit 34 displays the results of the execution of the store application and the storage application. The display unit 34 displays a digital image signal generated by the image capturing unit 35. The image capturing unit 35 includes, for example, an optical lens and an image capturing device (image sensor) that converts incident light from the optical lens into an electrical signal. The image capturing unit 35 sequentially generates digital images and outputs the generated digital images to the display unit 34.

The code reader 36 analyzes code information included in an image signal generated by the image capturing unit 35, and extracts (acquires) data (e.g., product information such as a product code, and consuming time limit information) from the code information. The communication unit 37 is a communication interface for communicating with the store server 5 and the storage server 8. The communication protocol is, but not limited to, HTTPS, for example.

As illustrated in FIG. 15, the store terminal 4 includes a control unit 41, a storage 42, an operation input unit 43, a display unit 44, and a communication unit 45.

The control unit 41 is constituted mainly by a microprocessor. The control unit 41 controls the entire store terminal 4. For example, the microprocessor included in the control unit 41 causes the display unit 44 to display a result of execution made by a web browser.

The storage 42 is a non-volatile memory. For example, the storage 42 is an SSD such as a flash memory. The storage 42 stores, for example, the totaled data acquired from the storage server 8.

The operation input unit 43 is a keyboard or a pointing device, for example. The display unit 44 includes a liquid crystal display panel or an organic electroluminescence panel, for example. The display unit 44 displays the totaled data acquired from the storage server 8. The communication unit 45 communicates with the storage server 8 by HTTPS, for example.

As illustrated in FIG. 15, the store server 5 includes a control unit 51, a storage 52, and a communication unit 53.

The control unit 51 is constituted mainly by a microprocessor. The control unit 51 controls the entire store server 5. For example, the microprocessor included in the control unit 51 loads and executes a server program recorded in the storage 52.

The storage 52 is a large-capacity storage device such as a hard disk drive (HDD). The storage 52 stores the store user database (refer to the store user DB in FIG. 2) as well as the server program. The storage 52 stores, for example, the purchase data (refer to FIG. 9) for each user concerning the purchase made by the user without a register or via a POS resister. The control unit 51 appropriately accesses the store user database at the time of executing the server program. The storage 52 stores data of an offered price of each product sold in the store, which are not illustrated. The control unit 51 refers to the data of the offered price at the time of receiving the price inquiry from the store application of the user.

The communication unit 53 is a communication interface for communicating with the user terminal 3, the payment proxy server 7, and the storage server 8. For example, the control unit 51 transmits the purchase data stored in the storage 52, via the communication unit 53 to the storage server 8.

Executing the server program by the control unit 51 implements functions of a price information providing unit 511 and a payment processing unit 512.

The price information providing unit 511 has the function of providing information including the offered price of the product to the store application in the user terminal 3. For example, the price information providing unit 511 provides the information included in the images G2 and G3 in FIG. 4.

The payment processing unit 512 has the function of performing payment processing of products included in a purchase schedule list, in cooperation with the payment proxy server 7, in response to an operated instruction (i.e., the payment request) of the payment button received from the user terminal 3. The payment processing unit 512 reads out data of the user name and the payment means from the store user database, and provides the read data to the payment proxy server 7.

As illustrated in FIG. 15, the storage server 8 includes a control unit 81, a storage 82, and a communication unit 83.

The control unit 81 is constituted mainly by a microprocessor. The control unit 81 controls the entire storage server 8. For example, the microprocessor included in the control unit 81 loads and executes a server program recorded in the storage 82.

The storage 82 is a large-capacity storage device such as an HDD. The storage 82 stores the user storage database (refer to the user storage DB in FIG. 3) as well as the server program. The control unit 81 appropriately accesses the user storage database at the time of executing the server program.

The communication unit 83 is a communication interface for communicating with the user terminal 3, the store terminal 4, and the store server 5.

The microprocessor executes the server program. Thereby, the control unit 81 functions as a data acquisition unit 811, a totaling unit 812, an output control unit 813, a reception unit 814, and a product order unit 815.

As illustrated in FIG. 11, the data acquisition unit 811 acquires, as storage data (one example of product storage information), information including a category, a consuming time limit, and a quantity of a product before consumption, for each user. The data acquisition unit 811 receives the purchase data from the store server 5 (at the step S35 in FIG. 7). The data acquisition unit 811 acquire the storage data for each user (one example of product storage information) by receiving the storage data from the storage application in the user terminal 3 (at the step S62 in FIG. 11). However, a method of acquiring the storage data is not limited to this. As described above, the storage application can also acquire the storage data by working in cooperation with the image-capturing function of the user terminal 3 and thereby acquiring an image of the product, or by receiving data of a weight of the product from a wireless tag including a weight sensor incorporated near a bottom surface of the product.

As illustrated in FIG. 12, the totaling unit 812 generates totaled data (FIG. 13). The totaled data include a totaled quantity of a product for each consuming time limit and a totaled number of the users each storing the product for each consuming time limit. The totaled quantity and the totaled number are determined from the storage data of the users living within the predetermined range from the store selling the product, based on the storage data for each of the users acquired by the data acquisition unit 811 and the address information of the users. The totaling unit 812 may change the totaling-target predetermined range from the store, depending on the product, the consuming time limit, or the like.

The control unit 81 can generate and transmit coupon data, based on the totaled data, for the users registered in the store user database.

As illustrated in FIG. 12, the output control unit 813 outputs, to the store terminal 4, the totaled data that are the result of the totaling determined by the totaling unit 812.

As illustrated in FIG. 14, the reception unit 814 receives a request (the coupon reservation request in FIG. 14) concerning a reservation of purchase of the product, from the storage application in the user terminal 3, for each user.

As illustrated in FIG. 14, the product order unit 815 performs product order processing, depending on the coupon reservation requests from the storage applications in the respective user terminals 3, in such a way that the products are delivered to the store. The product order processing is processing of transmitting, to an unillustrated product order system, an order request that includes information of a product code of the order-target product and an order amount of the product. At this time, the order amount of the product included in the order request is set in such a way as to exceed at least the number of the coupon requests.

As described above, in the product storage system 1 according to the present embodiment, the storage server 8 acquires, from the store server 5 and the user terminal 3, the storage data including a category, a consuming time limit, and a quantity of a product before consumption, for each user. The storage server 8 totals a quantity of the product, for each consuming time limit, and totals the number (the number of the customers) of the users each storing the product, for each consuming time limit, in such a way as to determine the totaled quantity and the totaled number from the storage data of the users living within the predetermined range from the store. The storage server 8 outputs the totaled results to the store terminal 4. When the consuming time limit of the product stored by the user living within the predetermined range from the store becomes close, there is a high probability that the user will visit the store to purchase new one. Thus, the totaled results represent visualized potential demand for the product within the predetermined range from the store. For this reason, the store can accurately determine an order amount of the product, based on the totaled results.

The product storage system 1 according to the present embodiment visualizes a quantity of the product for each consuming time limit stored by the users living within the predetermined range from the store, and can accurately determine an order amount of the product. Thus, a system that reduces food waste in an entire supply chain can be constructed.

Adjusting the predetermined range from the store in the totaling can set a marketing area for the product. This can also be used for planning of production in a factory that supplies the products to stores in a specific marketing area (e.g., the Kanto area).

In one embodiment, a machine-learning model may be generated and trained based on combined data of a quantity (a quantity of a product stored by the users) of a product for each consuming time limit and an order amount of the product that has been determined based on this quantity. The thus-trained machine-learning model may estimate an optimum order amount of the product.

The user storage database includes the consuming time limit information for each product stored by the user. Thus, in one embodiment, the storage server 8 may propose a dish menu that can be cooked or prepared by using the one or more products whose consuming time limits are close. For example, the storage server 8 stores a dish database representing an association relation between the one or more products and a dish menu for which the one or more products are used as ingredients. The control unit 81 in the storage server 8 refers to the storage data of the processing-target user, and thereby identifies one or more products whose consuming time limit are close. Then, the control unit 81 refers to the dish database, and thereby determines the dish menu that can be cooked or prepared by using a part or all of the identified one or more products. Then, the control unit 81 provides information of the determined dish menu to the storage application of the processing-target user. In other words, the control unit 81 as the output control unit outputs, to the user terminal 3, information presenting items of the dish for which the identified one or more products are used as ingredients. Thereby, consumption of the product whose consuming time limit is close is promoted. Thus, food waste can be reduced, and convenience for the user can be improved.

The storage application may be configured in such a way that when the user does not keep one or more products necessary for the determined dish menu, the storage application can order the one or more products to the store.

In the case of proposing a dish menu, the proposed dish menu may be a menu identified based on a past product-purchase history of the user, or may be a menu modified from the menu identified based on the past product-purchase history, or may be a menu completely different in a genre from the menu identified based on the past product-purchase history. When the storage application has a function of registering an allergy product to which the user is allergic, the dish menu may be proposed in such a way as not to include the allergy product.

In the system configuration illustrated in FIG. 1, for example, the user storage database in the storage server 8 is updated based on purchase data of products for which the user has completed payment in the store R without a register or via a POS register or the like. When the user purchases a product in a store other than the store R, the user inputs information of the product to the storage application, and thereby, the user storage database in the storage server 8 is updated based on the input data.

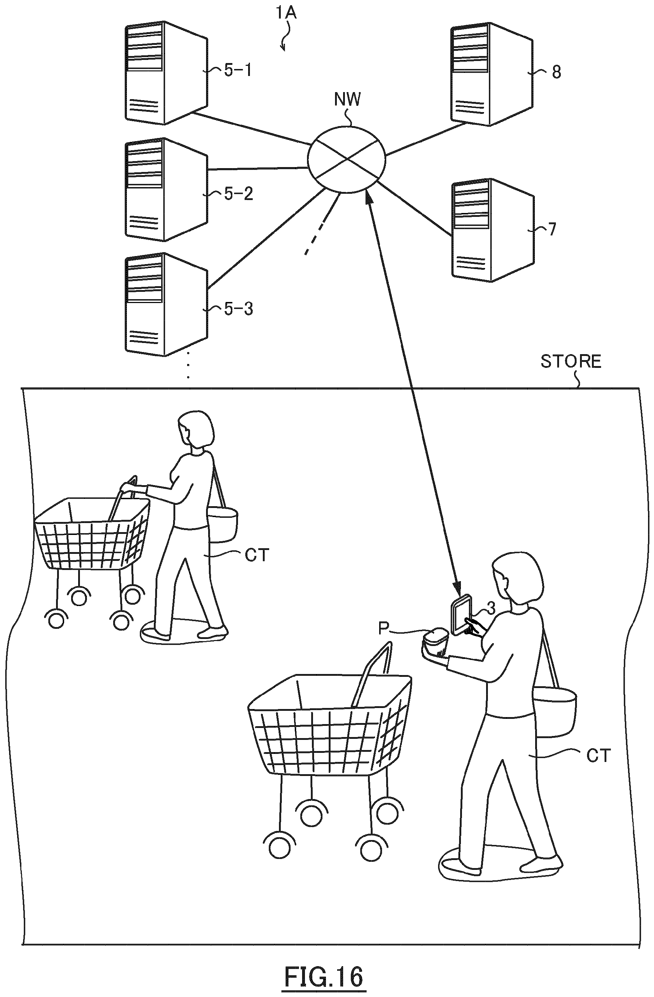

In one embodiment, the storage server 8 may acquire the purchase data from each of a plurality of stores used by the user to update the user storage database. FIG. 16 illustrates a system configuration of a product storage system 1A according to one embodiment. In the product storage system 1A illustrated in FIG. 16, the storage server 8 includes the user storage database and can communicate with store servers 5-1, 5-2, 5-3, ... associated with a plurality of the stores.

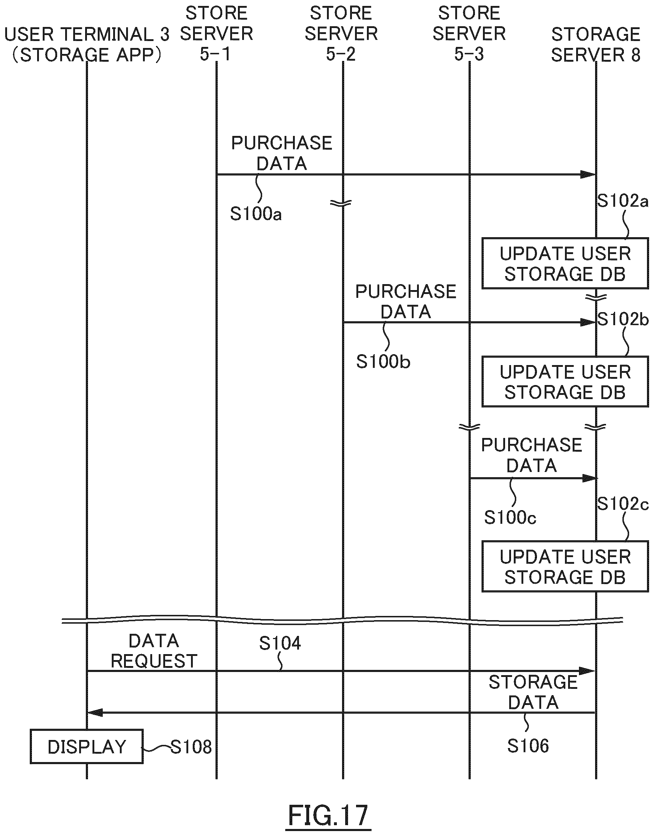

FIG. 17 illustrates a sequence chart that represents processing of the store application in the user terminal 3 in the product storage system 1A illustrated in FIG. 16. As illustrated in FIG. 17, the store servers 5-1, 5-2, and 5-3 each transmits the purchase data to the storage server 8 at each time of performing unillustrated payment processing (at steps S100a, S100b, and S100c). The payment processing includes a series of steps S20 to S30 in FIG. 7. Each time the storage server 8 receives the purchase data from the store server 5-1, 5-2, or 5-3, the storage server 8 updates the user storage database, with the received purchase data (at steps S102a, S102b, or S102c). Accordingly, products for which the same user has paid in a plurality of the stores are managed in a unified manner in the user storage database of the storage server 8.

The purchase data received by the storage server 8 include the user ID that is the same as or associated with the user ID managed in the user storage database of the storage server 8. The storage server 8 generates or updates the user storage database, based on the user ID.

The storage application transmits a data request for acquiring data from the storage server 8 (at step S104). The storage application transmits the data request, for example, based on a predetermined operation made by the user. When the storage server 8 receives the data request, the storage server 8 reads out the storage data associated with the user ID of the request source, and transmits the read-out storage data to the storage application (at step S106). The storage application displays the received storage data (at step S108).

In the product storage system 1A, the purchase data including the user ID are transmitted to the storage server 8 from the store servers 5-1, 5-2, 5-3, ... associated with a plurality of the stores, and are managed, in a unified manner, as the storage data of the user in the user storage database. In other words, this system is configured in such a way that the storage information does not depend on the specific store. Accordingly, the user can check product storage contents of his or her home, for products purchased in any one of the stores, by viewing one piece of the storage data. The user himself or herself does not need to input data of purchased products. Thus, convenience is high in a case of managing storage of products when the user uses a plurality of the stores.

In the above-described embodiments and modified examples, at least a part of the functions of the store server 5 and the storage server 8 may be implemented by software of the user terminal 3. In the above-described embodiments and modified examples, at least a part of the functions of the user terminal 3 may be implemented by software of the store server 5 or the storage server 8. The functions of the user terminal 3 and the functions of the store server 5 and the storage server 8 may be each dispersed among and implemented by the user terminal 3, the store server 5, and the storage server 8, depending on necessity. The functions executed by the store server 5 and the storage server 8 may be dispersed among and executed by a plurality of devices.

The information processing system according to the present invention can also be applied, for example, to a case where a product is purchased via a system of online sale, based on product information and time limit information, and a case where a product is purchased via a system of sale by weight. For example, when the user purchases a product via online sale, the storage server acquires purchase data for the user from a server providing the online sale service, and thereby updates the user storage database. When the user purchases a product in the store via the system of sale by weight, the user can use the store application to make payment, based on code information affixed to the product at the time of being sold by weight. Thus, a system can be constructed in such a way that the storage server updates the user storage database in a manner similar to that illustrated in FIG. 7.

Although the embodiments of the information processing device, the information processing method, and the program according to the present invention are described above, the present invention is not limited to the above-described embodiments. The above-described embodiments can be variously improved or modified within a range that does not depart from the essence of the present invention. For example, the individual technical features described in the above-described embodiments can be appropriately combined as long as a technical contradiction does not occur.

The present invention is related to Japanese Patent Application No. 2022-92677 filed with the Japan Patent Office on June 8, 2022, the entire contents of which are incorporated by reference into the description of the present application.

## Claims

1. An information processing device comprising:
an acquisition unit that acquires, as product storage information, information including a product type, an effective time limit, and a quantity of a product before consumption, for each of users;
a totaling unit that determines a totaled quantity of the product and a totaled number of users each storing the product, for each of effective time limits, from the product storage information for users living within a predetermined range from a store selling the product, based on the product storage information for each of the users acquired by the acquisition unit and address information of the users; and
an output control unit that outputs results determined by the totaling unit.

2. The information processing device according to claim 1, wherein
when the totaled quantity of the product for each of the effective time limits, determined by the totaling unit, satisfies a predetermined condition, the output control unit outputs privilege information to user terminals of the users living within the predetermined range, subject to purchase of the product.

3. The information processing device according to claim 1 or 2, wherein
when the totaled number of users each storing the product for each of the effective time limits, determined by the totaling unit, satisfies a predetermined condition, the output control unit outputs privilege information to user terminals of the users living within the predetermined range, subject to purchase of the product.

4. The information processing device according to claim 1 or 2, comprising:
a reception unit that receives, from a user terminal for each of the users, a request for a reservation concerning purchase of the product; and
a product order unit that orders the product, based on the request from each of the user terminals, so that the product is delivered to the store.

5. The information processing device according to claim 4, wherein
the product order unit orders a number of the product that is set depending on a number of the requests for the product received by the reception unit.

6. The information processing device according to claim 4, wherein
the product order unit adjusts an order amount of the product, depending on a ratio of a number of the requests received by the reception unit to a number of users of the store, or a ratio of the number of the requests received by the reception unit to an average number of the product that have been sold per day in the store.

7. The information processing device according to claim 1 or 2, wherein
the output control unit outputs, to a user terminal of the user, information presenting an item of a dish for which the product is used as an ingredient.

8. An information processing method comprising:
a step of acquiring, as product storage information, information including a product type, an effective time limit, and a quantity of a product before consumption, for each of users;
a step of determining a totaled quantity of the product and a totaled number of users each storing the product, for each of effective time limits, from the product storage information for users living within a predetermined range from a store selling the product, based on the product storage information for each of the users acquired at the step of acquiring and address information of the users; and
a step of outputting results determined in the step of determining.

9. A program causing a computer to execute predetermined processes, wherein
the processes include:
a step of acquiring, as product storage information, information including a product type, an effective time limit, and a quantity of a product before consumption, for each of users;
a step of determining a totaled quantity of the product and a totaled number of users each storing the product, for each of effective time limits, from the product storage information for users living within a predetermined range from a store selling the product, based on the product storage information for each of the users acquired at the step of acquiring and address information of the users; and
a step of outputting results determined in the step of determining.
